# FASCICULE DE BREVET EUROPEEN

(11) **EP 0 460 989 B1**
(45) Date de publication et mention de la délivrance du brevet: **21.12.1994**
(21) Numéro de dépôt: 91401327.1
(22) Date de dépôt: 23.05.1991
(51) Int. Cl.: F16L 33/02

(54) **Collier de serrage à réserve de capacité**
Schlauchbinder mit Reservekapazität
Hose clip with spare capacity

(30) Priorité: 23.05.1990 FR 9006477
(43) Date de publication de la demande: 11.12.1991
(73) Titulaire: Etablissements CAILLAU, F-92130 Issy-les-Moulineaux (FR)
(72) Inventeur: Calmettes, Lionel, F-41200 Romorantin Lanthenay (FR); Andre, Michel, F-41200 Romorantin Lanthenay (FR)
(74) Mandataire: Descourtieux, Philippe

(56) Documents cités:
- DE-B- 1 091 821
- FR-A- 2 616 879

## Description

On connaît déjà, notamment par le brevet FR-A-2 470 275, un collier de serrage constitué par une bande de métal enroulée sur elle-même et présentant à ses deux extrémités des moyens complémentaires de serrage et d'agrafage dans la position serrée du collier. Ce brevet antérieur propose de prévoir, dans la bande constituant le collier, une ondulation s'étendant sur toute la largeur de la bande et faisant saillie vers l'extérieur. Elle permet de conférer au collier, après son montage et son serrage sur un tuyau souple, une capacité de déformer élastiquement sa périphérie dans le sens d'une diminution de sa longueur. Le collier ainsi peut s'adapter à une diminution de la périphérie externe du tuyau souple, par exemple en cas de fluage du matériau du tuyau, tout en continuant d'exercer sur ce dernier une force de serrage suffisante. Ce type de collier est fréquemment dénommé "collier à réserve de capacité".

On a cependant constaté deux inconvénients de ce genre de colliers, qui correspondent au préambule de la revendication 1.

D'une part, notamment dans le cas des colliers de petit diamètre, l'outil qui est destiné à serrer et à agrafer les deux extrémités du collier prend appui sur l'ondulation au lieu de venir en contact avec les butées permettant le serrage. L'opération de serrage et d'agrafage est ainsi plus difficile.

D'autre part, si le collier doit présenter une grande "réserve de capacité" la saillie radiale de l'ondulation peut atteindre des dimensions prohibitives et il n'est pas toujours possible de prévoir deux ou plusieurs ondulations. Ce sera notamment le cas si la continuité de la périphérie interne du collier doit être maintenue, par exemple au moyen d'un prolongement convenable du brin intérieur de la bande constituant le collier.

On a déjà proposé, par le brevet FR-A-2 616 879, une première solution pour éliminer en partie les inconvénients qui viennent d'être soulignés, mais cette solution n'est pas toujours utilisable, compte tenu des exigences de plus en plus sévères de la technique.

D'autre part, le brevet DE-A-1.091.821 propose de raidir une ondulation de la bande au moyen d'une nervure longitudinale, située au voisinage du sommet de l'ondulation et s'étendant de façon sensiblement symétrique par rapport à ce sommet.

Cette solution n'évite pas les inconvénients qui ont été signalés plus haut et surtout ne permet pas en général d'obtenir une "réserve de capacité" correspondant aux exigences actuelles de la technique.

Enfin il est évident que l'application de la solution proposée par le brevet allemand précité aux colliers selon l'un ou l'autre des brevets français déjà mentionnés ne permet pas de résoudre les deux problèmes techniques évoqués plus haut.

L'invention a donc pour objet un collier à réserve de capacité, du type qui vient d'être rappelé, permettant d'éliminer ses inconvénients dans les cas où la première solution évoquée ne convient pas.

Selon l'invention, dans la zone de raccordement de l'ondulation à la bande, située du côté du brin intérieur de la bande, il est prévu un gousset de raidissement de cette zone de raccordement.

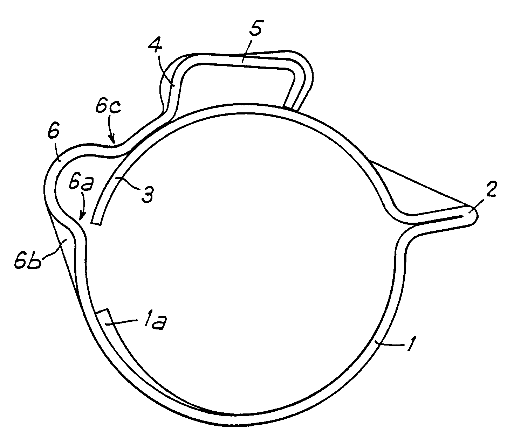

L'invention sera mieux comprise et ses avantages apparaîtront au cours de la description qui va suivre, en référence au dessin annexé, dans lequel la figure unique représente, à grande échelle, un collier de serrage conforme à l'invention.

Si l'on se reporte au dessin, on voit un collier du type décrit dans le brevet FR-A-2 470 275. La bande métallique **1**, enroulée sur elle-même, comporte au voisinage de l'extrémité du brin intérieur une oreille **2** constituée par un pli radial, lequel est lié à un prolongement **3** situé sous le brin extérieur. Ce dernier comporte également une oreille **4**, constituée par un pli radial muni d'un crochet **5**.

Au delà de l'oreille **4**, par rapport à son crochet **5**, la bande **1** comporte une ondulation **6**, dont la saillie radiale est voisine de celle de l'oreille **4** et, de préférence, au plus égale à celle-ci.

Dans la zone de raccordement **6a** de l'ondulation **6** à la bande **1**, il est prévu un gousset **6b**, obtenu par exemple par un embouti de la face interne de la bande de préférence au milieu de sa largeur. Le gousset **6b** est approximativement délimité, dans le sens radial, par une ligne droite, tangente à la fois à l'ondulation **6** et à la bande **1** après son enroulement sur elle-même.

On peut ici noter que la zone de raccordement **6a** est celle qui, par rapport au sommet de l'ondulation **6**, se trouve du côté de la partie de la bande qui constitue le brin intérieur, même si, en général, cette zone **6a** est avantageusement éloignée de l'oreille **2** et de son prolongement **3**. Le bord terminal de ce dernier présente une forme de fourchette susceptible de coopérer avec un bossage **1a** faisant radialement saillie sur la face interne de la bande, ainsi qu'on l'a décrit dans le brevet EP-A-243 224.

Pour le serrage du collier, un outil du genre pince prend appui sur l'oreille **2** et sur l'oreille **4** et les rapproche l'une de l'autre jusqu'à ce que le crochet **5**, étant passé par-dessus l'oreille **2**, s'agrafe derrière elle.

La présence du gousset **6b** interdit évidemment à l'une des mâchoires de l'outil de prendre appui sur l'ondulation **6**, ce qui facilite l'opération de serrage, notamment si le collier doit être monté dans une zone où il sera peu visible.

D'autre part, au cours de l'opération de serrage, la zone de raccordement **6c**, opposée à la zone **6a**, se déforme dans le sens d'une augmentation de son rayon de courbure et l'ondulation **6** s'aplatit, au moins jusqu'à la naissance du gousset **6b**. Au contraire, la zone de raccordement **6a**, renforcée par le gousset **6b**, conserve en général la forme qui lui a été donnée à la fabrication. Les déformations, dont il vient d'être question, restent dans le domaine de l'élasticité du métal et n'entraînent normalement aucune déformation locale permanente du collier. La "réserve de capacité" ainsi créée dans le collier pourra donc être intégralement restituée par le métal.

Si, dans certains cas, l'opération de serrage du collier nécessite un effort très important, la zone de raccordement **6a** verra son rayon augmenter légèrement pendant que le gousset **6b** s'allonge lui-même quelque peu par déformation élastique.

Ainsi, non seulement le gousset **6b** améliore la facilité de mise en place du collier, mais surtout on a pu constater qu'il constitue lui-même une "réserve d'élasticité" tout à fait opportune pour maintenir la déformation de l'ondulation dans le domaine d'élasticité du métal et assurer la pleine efficacité de la "réserve de capacité" du collier.

Bien que l'on ait décrit un exemple de réalisation dans lequel les moyens complémentaires d'agrafage sont d'un type particulier, il est évident que l'invention est applicable à tous les types de colliers "à réserve de capacité".

## Revendications

1. Collier de serrage constitué par une bande métallique **(1)** enroulée sur elle-même, dont les extrémités sont respectivement munies de moyens complémentaires d'accrochage **(2,** **5)** susceptibles d'être accouplés l'un à l'autre au cours du serrage du collier au moyen d'un outil, par exemple en forme de pince, ledit collier étant d'autre part pourvu d'une ondulation **(6)** formant réserve de capacité et susceptible d'être déformée par aplatissement au cours du serrage, caractérisé en ce que dans la zone de raccordement **(6a)** de l'ondulation à la bande, située du côté du brin intérieur de la bande, il est prévu un gousset de raidissement **(6b)** de cette zone de raccordement.

2. Collier selon la revendication 1, caractérisé en ce que le gousset **(6b)** est réalisé sous forme d'une nervure longitudinale sensiblement rectiligne située au milieu de la largeur de la bande.

## Patentansprüche

1. Schlauchklemme, gebildet durch ein aufgerolltes Metallband (1), dessen Enden mit entsprechenden komplementären Verhakungsmitteln (2, 5) versehen sind, welche während des Klemmens der Schlauchklemme mit Hilfe eines Werkzeugs, beispielsweise in Zangenform, miteinander kuppelbar sind, welche Schlauchklemme weiters mit einer Wellung (6) versehen ist, die eine Kapazitätsreserve bildet und durch Flachdrücken während des Klemmens verformbar ist, dadurch gekennzeichnet, daß in der Verbindungszone (6a) der Wellung mit dem Band, die sich auf der Seite des inneren Teils des Bandes befindet, eine Versteifung (6b) zur Verstärkung dieser Verbindungszone vorgesehen ist.

2. Schlauchklemme nach Anspruch 1, dadurch gekennzeichnet, daß die Versteifung (6b) in Form einer im wesentlichen geradlinigen Längsrippe ausgebildet ist, die sich in der Mitte der Breite des Bandes befindet.

## Claims

1. Clamp constituted by a metal band (1) wound on itself, of which the ends are respectively provided with complementary fastening means (2, 5) adapted to be coupled to each other when a tool, for example pliers, is tightening the clamp, said clamp further comprising an undulation (6) forming a reserve of capacity and being deformable by flattening during tightening, characterized in that in the zone of connection (6a) of the undulation to the band, located towards the inner end of the band, there is provided a gusset (6b) for reinforcing said zone of connection.

2. Clamp according to claim 1, characterized in that the gusset (6b) is in the form of a substantially rectilinear longitudinal rib located at the centre of the width of the band.
